# EUROPEAN PATENT APPLICATION

(11) **EP 2 884 635 A2**
(43) Date of publication of application: **17.06.2015**
(21) Application number: 14197231.5
(22) Date of filing: 10.12.2014
(51) Int. Cl.: H02K 15/00

(54) **Abrasive cleaning of inner cooled generator coils**

(30) Priority: 16.12.2013 US 201314107138
(71) Applicant: Siemens Energy, Inc., Orlando, FL 32826-2399 (US)
(72) Inventor: McCreight, Kim M., Oviedo, FL Florida 32765 (US); Yon, III, Terrell H., Orlando, FL Florida 32817 (US)
(74) Representative: Maier, Daniel Oliver

(57) **Abstract**

A method for abrasive cleaning of an internally cooled generator coil is presented. A shear hardening medium (12) with suspended abrasive particles is filled into cooling passages of the generator coil. Hydraulic pressure is applied to the shear hardening medium which locks the abrasive particles into a matrix position. A flow (14, 17) is imparted to the shear hardening medium with the cooling passage which applies a shearing force to the shear hardening medium. The locked abrasives (13) and the shearing force abrade an inner wall of the cooling passage (2) and remove deposits and products of corrosion (11) from the inner wall of the cooling passage. After removing the deposits and products of corrosion, the hydraulic pressure is released and the shear hardening medium is flushed (18) out of the cooling passages.

## Description

The application relates to abrasive cleaning of internally cooled generator coils.

A precise surface management is always a challenge for internally cooled generator coils. Internally cooled generator coils have a plurality of hollow conductors, a plurality of solid conductors and an insulation system. Cooling passages of the internally cooled generator coils are formed by the hollow conductors.

During operation of the generator, deposits or products of corrosion accumulate on inner walls of the hollow conductors. The accumulated deposits or products of corrosion increase the dynamic flow losses of the fluid cooling medium and impede heat conduction from the hollow conductors to the fluid cooling medium. The decrease of heat removal through the fluid cooling medium requires maintenance to the generator coils to remove accumulated deposits or products of corrosion from the inner walls of the hollow conductors.

Due to the small cross section of each hollow conductor in the internally cooled generator coils, the accumulated deposits or products of corrosion are hard to remove. A diameter of the cross section of each hollow conductor in the internally cooled generator coils is in a range of 0.5 mm to 2 mm.

Mechanical cleaning methods, such as machining the base metal of the hollow conductors to remove the deposits or products of corrosion, are not suitable for the internally cooled generator coils because of the small cross sections of the hollow conductors. The machining method also damages the base metal of the hollow conductors. The shape of the coils in generators incorporates an involute curve on the end which also makes a mechanical removal by machine tools not possible.

Although a chemical cleaning method using acids may be used to remove deposits or products of corrosion, this method often damages the base metal of the hollow conductors and incomplete removal can result in failure of the pressure boundary of the hollow conductors as the chemical action continues after flushing the acids.

In accordance with the present invention, a method for abrasive cleaning of a generator coil, wherein the generator coil is internally cooled and comprises a plurality of hollow conductors, comprises filling a cooling passage of the generator coil with a shear hardening medium comprising suspended abrasive particles, wherein the cooling passage is formed by each of the hollow conductors; applying a hydraulic pressure to the shear hardening medium for locking the suspended abrasive particles into a matrix position; imparting a flow to the shear hardening medium within the cooling passage for removing deposits and products of corrosion from an inner wall of the cooling passage; releasing the hydraulic pressure from the shear hardening medium after removing the deposits and products of corrosion; and flushing the shear hardening medium out of the cooling passage.

The present invention provides an efficient and precise surface management that may remove deposits or products of corrosion of an internally cooled generator coils without damaging the base metal of the hollow conductors is provided.

The shear hardening medium may comprise a visco-elastic abrasive medium, a rheopectic poly filled with viscosity increasing stiffening agents; or a semisolid polymer composition.

Preferably, the abrasive particles comprise aluminum oxide, or silicon carbide, or sand, diamond, or steel abrasives, or combinations thereof.

Preferably, the applied hydraulic pressure is in a range of 100 psi to 1,000 psi, or in a range of 200 psi to 800 psi, or in a range of 300 psi to 600 psi.

Preferably, the shear hardening medium entirely fills the cooling passage of the generator coil.

In one embodiment, the flow is imparted to the shear hardening medium within the cooling passage as a single pass having a unidirectional flow.

The header may be attached to one end of the generator coil in the single pass.

In another embodiment, the flow is imported to the shear hardening medium within the cooling passage as a reciprocated pass having an alternate flow.

The header may be attached to each end of the generator coil respectively in the reciprocated pass.

Preferably, a frequency of the alternate flow is in a range of 1,000 Hz to 10,000 Hz, or in a range of 1,200 Hz to 8,000 Hz, or in a range of 1,400 Hz to 6,000 Hz.

Preferably, the generator coil is cooled by cooling water, or by cooling air, or by hydrogen.

Preferably, the shear hardening medium is passed in the cooling passage at a speed in a range of 1 m/s to 10 m/s, or in a range of 2 m/s to 9 m/s, or in a range of 3 m/s to 7 m/s.

Preferably, a diameter of a cross section of each of the hollow conductor is in a range of 0.5 mm to 2 mm.

Various aspects and embodiments of the application as described above and hereinafter may not only be used in the combinations explicitly described, but also in other combinations. Modifications will occur to the skilled person upon reading and understanding of the description.

Embodiments of the application are explained in further detail with respect to the accompanying drawings in which:
FIG 1 shows a cross section of an internally cooled generator coil;
FIG 2 shows an apparatus for performing a single pass cleaning;
FIG 3 shows an apparatus for performing a reciprocated pass cleaning;
FIG 4 shows a longitudinal cross section of a hollow conductor with fluid cooling medium;
FIG 5 shows a longitudinal cross section of a hollow conductor with deposits;
FIG 6 shows a longitudinal cross section of a hollow conductor with a shear hardening fluid medium;
FIG 7 shows the shear hardening fluid medium with shear hardening force inside the hollow conductor;
FIG 8 shows a single pass cleaning with broken off deposits;
FIG 9 shows a reciprocated pass cleaning with broken off deposits;
FIG 10 shows flow of flushing medium to flush out the shear hardening fluid medium from the hollow conductor.
In the present invention, a shear hardening fluid medium with suspended abrasive particles is applied which removes deposits or products of corrosion and polish the insides of cooling passages down the micron level. Small convoluted passages may be cleaned using the proposed method.

According to an embodiment, an internally cooled generator coil includes a plurality of hollow conductors. Cooling passages of the internally cooled generator coil are formed by the hollow conductors. Each of the hollow conductors has a small cross section. For example, a diameter of the cross section of the hollow conductor is between 0.5 mm to 2 mm in an industrial practice.

During the operation of the generator, deposits or products of corrosion accumulate on inner walls of the hollow conductors. The accumulated deposits or products of corrosion increase the dynamic flow losses of the fluid cooling medium and impede heat conduction from the hollow conductors to the fluid cooling medium. The decrease of heat removal through the fluid cooling medium requires maintenance to the generator coil to remove the deposits or products of corrosion from the inner walls of the hollow conductors.

According to an embodiment, a shear hardening medium is filled into the cooling passage of the generator coil. Abrasive particles are suspended in the shear hardening medium.

According to an embodiment, a hydraulic pressure is applied to the shear hardening medium. The hydraulic pressure locks the suspended abrasive particles into a matrix position. A matrix position is a semiregular arrangement of the particles in the shear hardening medium that provides the abrasive action at the interface to the cooling passage. The shearing hardening of the shear hardening medium is a function of the applied hydraulic pressure. The applied hydraulic pressure locks the abrasive particles into the matrix position and does not exceed a capability of the hollow conductors to hold the pressure. The applied hydraulic pressure, for example, maybe in a range of 100 psi to 1,000 psi, or in a range of 200 psi to 800 psi, or in a range of 300 psi to 600 psi.

According to an embodiment, a flow is imparted to the shear hardening medium within the cooling passage. The flow applies a shear hardening force to the shear hardening medium. The deposits and products of corrosion are removed from inner wall of the cooling passage by the shear hardening force and the abrasive particles locked in the shear hardening medium.

According to an embodiment, after completion of removing the deposits and products of corrosion, the hydraulic pressure is released from the shear hardening medium.

According to an embodiment, the shear hardening medium is flushed out of the cooling passage after releasing the hydraulic pressure from the shear hardening medium.

According to an embodiment, a shearing hardening medium may be a visco-elastic abrasive medium. The medium behaves predominantly as an elastic solid at an applied strain of the orbital working motion and applies orbital or other relative working motion to produce strain rates which bring the medium into a predominantly elastic deformation.

According to an embodiment, the visco-elastic abrasive medium may be a rheopectic poly filled with viscosity increasing stiffening agents and loadings of abrasive particles.

According to an embodiment, the shearing hardening medium may be a semisolid polymer composition.

According to an embodiment, the abrasive particles may be commonly used industrial abrasive particles, such as aluminum oxide, or silicon carbide, or sand, or diamond, or steel abrasives, etc., or combinations thereof.

According to an embodiment, the shear hardening medium entirely fills the cooling passage of the generator coil so that the entire cooling passage is cleaned during the cleaning.

According to an embodiment, the flow may be imparted within the cooling passage as a single pass cleaning having a unidirectional flow.

According to an embodiment, one header used for the cleaning is attached to one end of the generator coil and connected to a hydraulic pump by a high pressure flexible hose in the single pass cleaning.

According to an embodiment, the flow may be imparted within the cooling passage as a reciprocated pass cleaning having alternate flow.

According to an embodiment, one head used for the cleaning is attached to each end of the generator coil and connected to a hydraulic pump by a high pressure flexible hose respectively in the reciprocated pass cleaning. The header will be removed after the cleaning A frequency of the alternate flow, for example, may be in a range of 1,000 Hz to 10,000 Hz, or in a range of 1,200 Hz to 8,000 Hz, or in a range of 1,400 Hz to 6,000 Hz.

According to an embodiment, the shear hardening medium is passed in the cooling passage at a high speed so that the shearing hardening force is increased and the abrasive particles are firmly locked in the position. The passing speed, for example, may be in a range of 1 m/s to 10 m/s, or in a range of 2 m/s to 9 m/s, or in a range of 3 m/s to 7 m/s.

According to an embodiment, the generator coil is cooled by cooling medium, such as by cooling water, or by cooling air, or by hydrogen, etc.

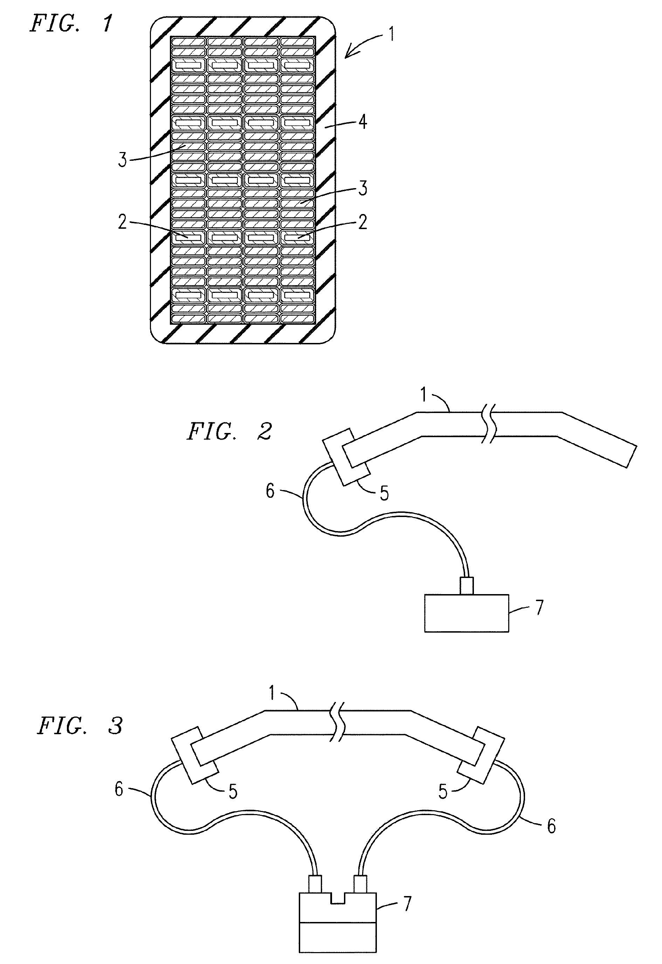

FIG 1 shows a cross section of an internally cooled generator coil 1. The internally cooled generator coil 1 includes a plurality of hollow conductors 2, a plurality of solid conductors 3 and an insulation system 4. Cooling passages of the internally cooled generator coil are formed by the hollow conductors 2. Each of the hollow conductors 2 has a small cross section. A diameter of the cross section of the hollow conductors 2, for example, is between 0.5 mm to 2 mm.

FIG 2 shows an apparatus for performing a single pass cleaning. One header 5 is attached to one end of the generator coil 1. FIG 3 shows an apparatus for performing a reciprocated pass cleaning. One header 5 is attached to each end of the generator coil 1 respectively. The header 5 is connected to the hydraulic pump 7 by a high pressure flexible hose 6.

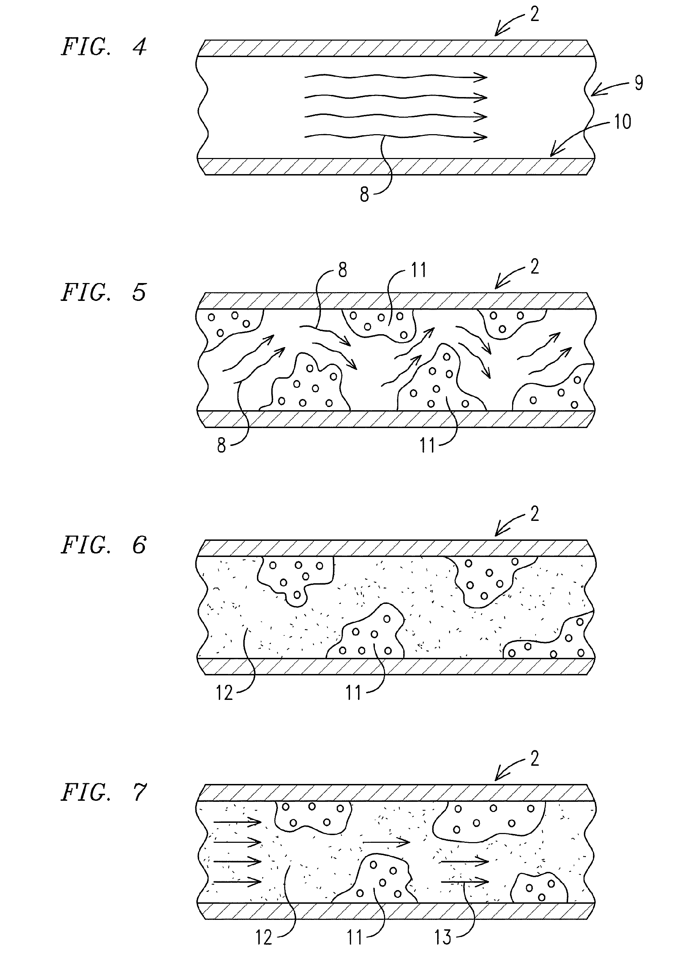

During operation of the generator, the generator coil 1 is cooled by fluid cooling medium 8 within a cooling passage 9. The cooling passage 9 is formed by the hollow conductor 2 having an inner wall 10, as shown in FIG 4. The fluid cooling medium 8 maybe cooling water, or cooling air, or hydrogen, etc.

During the operation of the generator, deposits or products of corrosion 11 accumulate on the inner wall of the hollow conductors 2, which are shown in FIG 5. The accumulated deposits or products of corrosion 11 increase the dynamic flow losses of the fluid cooling medium 8 and impede heat conduction from the hollow conductors 2 to the fluid cooling medium 8. The decrease of heat removal through the fluid cooling medium 8 requires maintenance to the generator coil 1 to remove the deposits or products of corrosion 11 from the inner walls of the hollow conductors 2.

According to an embodiment, the cooling passage of the hollow conductor 2 is filled with a shear hardening medium 12 during the maintenance, which is shown in FIG 6. The shear hardening medium 12 has abrasive particles suspended therein. The shear hardening medium 12 may be, for example, a visco-elastic abrasive medium, or for example, a rheopectic poly filled with viscosity increasing stiffening agents and loadings of the abrasive particles, or for example, a semisolid polymer composition.

According to an embodiment, the shear hardening medium 12 is applied with a hydraulic pressure. The hydraulic pressure locks the abrasive particles suspended in the shear hardening medium 12 into a matrix position. A matrix position is a semi-regular arrangement of the particles in the shear hardening medium that provides the abrasive action at the interface to the cooling passage. The viscosity of the shear hardening medium is partly a function of the hydraulic pressure. The applied hydraulic pressure locks the abrasive particles into the matrix position and does not exceed a capability of the hollow conductors to hold the pressure. The applied hydraulic pressure, for example, may be in a range of 100 psi to 1,000 psi, or in a range of 200 psi to 800 psi, or in a range of 300 psi to 600 psi.

According to an embodiment, a flow is imparted to the shear hardening medium 10 within the cooling passage in the hollow conductor 2. A shearing hardening force 13 is applied to the shear hardening medium 12 by the imparted flow, as shown in FIG 7.

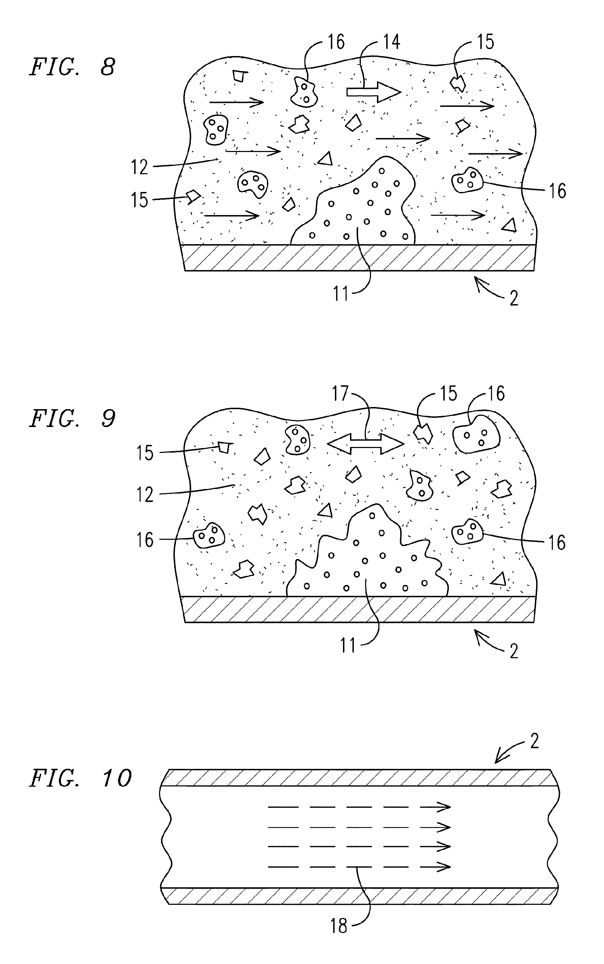

FIG 8 shows an embodiment of a single pass cleaning. In the single pass cleaning, a unidirectional flow 14 is applied to the shear hardening medium 12 so that shear hardening medium 12 moves inside the hollow conductor 2 in one direction while under pressure. The flow of the pressurized shear hardening medium 12 and the locked abrasive particles 15 abrade the deposits or products of corrosion 11 into broken off deposits or products of corrosion 16.

FIG 9 shows an embodiment of a reciprocated pass cleaning. In the reciprocated pass cleaning, alternate flows 17 are applied to the shear hardening medium 10 so that the shear hardening medium 12 moves inside the hollow conductor 2 in alternate flow directions while under pressure. The alternate flow of the pressurized shear hardening medium 10 and the locked abrasive particles 13 abrades the deposits or products of corrosion 11 into broken off deposits or products of corrosion 16.

According to an embodiment, the shear hardening medium 12 moves inside the hollow conductor 2 for a sufficient period of time so that the deposits are abraded from the inner walls of the hollow conductor 2. At the completion of the abrasion, the shear hardening medium 12 is released from the hydraulic pressure and drained from the hollow conductors 2. FIG 10 shows the residue of the shear hardening medium 12 is flushed out of the hollow conductor 2 by a flushing medium 18.

After flushing out the shear hardening medium 12 from the hollow conductor 2, the generator coil 1 is returned to service with unimpeded flow of the cooling medium item 8 to provide adequate heat removal.

### List of references:

- 1: generator coil
- 2: hollow conductor
- 3: solid conductor
- 4: insulation system
- 5.: header
- 6: flexible hose
- 7: hydraulic pump
- 8: fluid cooling medium
- 9: cooling passage
- 10: inner wall of the hollow conductor
- 11: deposits or products of corrosion
- 12: shearing hardening medium
- 13: shear hardening force
- 14: unidirectional flow of the shearing hardening medium
- 15: abrasive particles
- 16: broken off deposits or products of corrosion
- 17: alternate flows of the shearing hardening medium
- 18: flushing medium

While specific embodiments have been described in detail, those with ordinary skill in the art will appreciate that various modifications and alternative to those details could be developed in light of the overall teachings of the disclosure. For example, elements described in association with different embodiments may be combined. Accordingly, the particular arrangements disclosed are meant to be illustrative only and should not be construed as limiting the scope of the claims or disclosure, which are to be given the full breadth of the appended claims, and any and all equivalents thereof. It should be noted that the term "comprising" does not exclude other elements or steps and the use of articles "a" or "an" does not exclude a plurality.

## Claims

1. A method for abrasive cleaning of a generator coil, wherein the generator coil is internally cooled and comprises a plurality of hollow conductors, the method comprising:
filling a cooling passage of the generator coil with a shear hardening medium comprising suspended abrasive particles, wherein the cooling passage is formed by each of the hollow conductors;
applying a hydraulic pressure to the shear hardening medium for locking the suspended abrasive particles into a matrix position;
imparting a flow to the shear hardening medium within the cooling passage for removing deposits and products of corrosion from an inner wall of the cooling passage;
releasing the hydraulic pressure from the shear hardening medium after removing the deposits and products of corrosion; and
flushing the shear hardening medium out of the cooling passage.

2. The method as claimed in claim 1, wherein the shear hardening medium comprises a visco-elastic abrasive medium.

3. The method as claimed in claim 1, wherein the shear hardening medium comprises a rheopectic poly filled with viscosity increasing stiffening agents.

4. The method as claimed in claim 1, wherein the shear hardening medium comprises a semisolid polymer composition.

5. The method as claimed in any preceding claim, wherein the abrasive particles comprise aluminum oxide, or silicon carbide, or sand, diamond, or steel abrasives, or combinations thereof.

6. The method as claimed in any preceding claim, wherein the applied hydraulic pressure is in a range of 100 psi to 1,000 psi, or in a range of 200 psi to 800 psi, or in a range of 300 psi to 600 psi.

7. The method as claimed in any preceding claim, wherein the shear hardening medium entirely fills the cooling passage of the generator coil.

8. The method as claimed in any preceding claim, wherein the flow is imparted to the shear hardening medium within the cooling passage as a single pass having a unidirectional flow.

9. The method as claimed in claim 8, wherein a header is attached to one end of the generator coil in the single pass.

10. The method as claimed in any of claims 1 to 7, wherein the flow is imported to the shear hardening medium within the cooling passage as a reciprocated pass having an alternate flow.

11. The method as claimed in claim 10, wherein a header is attached to each end of the generator coil respectively in the reciprocated pass.

12. The method as claimed in claim 10 or claim 11, wherein a frequency of the alternate flow is in a range of 1,000 Hz to 10,000 Hz, or in a range of 1,200 Hz to 8,000 Hz, or in a range of 1,400 Hz to 6,000 Hz.

13. The method as claimed in any preceding claim, wherein the generator coil is cooled by cooling water, or by cooling air, or by hydrogen.

14. The method as claimed in any preceding claim, wherein the shear hardening medium is passed in the cooling passage at a speed in a range of 1 m/s to 10 m/s, or in a range of 2 m/s to 9 m/s, or in a range of 3 m/s to 7 m/s.

15. The method as claimed in any preceding claim, wherein a diameter of a cross section of each of the hollow conductor is in a range of 0.5 mm to 2 mm.
